(19) Europäisches Patentamt
European Patent Office
Office européen des brevets

(11) **EP 2 384 561 B1**

## (12) EUROPÄISCHE PATENTSCHRIFT

(45) Veröffentlichungstag und Bekanntmachung des Hinweises auf die Patenterteilung:
**06.01.2016  Patentblatt 2016/01**

(21) Anmeldenummer: **09749043.7**

(22) Anmeldetag: **22.10.2009**

(51) Int Cl.:
*H04L 7/10* *(2006.01)*    *G01S 15/87* *(2006.01)*
*H04L 5/14* *(2006.01)*

(86) Internationale Anmeldenummer:
**PCT/EP2009/063897**

(87) Internationale Veröffentlichungsnummer:
**WO 2010/076051 (08.07.2010 Gazette 2010/27)**

(54) **VORRICHTUNG UND VERFAHREN ZUR ZEITKALIBRIERUNG ZWISCHEN SENDE-/ EMPFANGSBAUSTEINEN**

DEVICE AND METHOD FOR THE TIME CALIBRATION BETWEEN TRANSMISSION AND RECEIVING COMPONENTS

DISPOSITIF ET PROCÉDÉ D'ÉTALONNAGE TEMPOREL ENTRE DES MODULES ÉMETTEURS/RÉCEPTEURS

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.12.2008   DE 102008063373**
**17.02.2009   DE 102009000924**

(43) Veröffentlichungstag der Anmeldung:
**09.11.2011   Patentblatt 2011/45**

(73) Patentinhaber: **Robert Bosch GmbH**
**70442 Stuttgart (DE)**

(72) Erfinder:
• **TREPTOW, Thomas**
**71229 Leonberg (DE)**
• **HERDER, Bjoern**
**70469 Stuttgart (DE)**

(56) Entgegenhaltungen:
**EP-A1- 1 434 382       WO-A1-2008/006613**
**DE-A1- 4 023 538       DE-A1-102008 031 498**
**US-A- 6 109 102        US-A1- 2005 024 111**
**US-A1- 2007 280 393**

**Beschreibung**

Die Erfindung betrifft die Signalübertragung zwischen zwei Sende-/Empfangsbausteinen, insbesondere die zeitliche Kalibrierung der übertragenen Signale. Insbesondere betrifft die Erfindung die Übertragung von Daten, insbesondere Sensordaten, Adressen oder Kommandos. Ferner betrifft die Erfindung eine Sende-/Empfangsschaltung mittels der das Verfahren ausführbar ist und eine Verwendung der Sende-/Empfangsschaltung in einer Ultraschall-Messstrecke.

Stand der Technik

Die Datenübertragung zwischen einem ersten Sende-/Empfangsbaustein, etwa einem Steuergerät und daran angeschlossenen Sensoren als weitere Sende-/Empfangsbausteine erfolgt durch zeitanaloge und wertdiskrete Signale. Bei der zeitanalogen Signalübertragung ist bei der Signalerzeugung als auch bei der Signalauswertung ein hoher Grad an Genauigkeit des Referenztaktes erforderlich. Dies gilt sowohl für sendende Bausteine als auch für den Übertragungskanal mit Datenschnittstellen. Dazu muss die im Signal enthaltene Zeitinformation möglichst fehlerfrei empfangen und ausgewertet werden.

Aus der DE 101 38 883 ist ein Verfahren zur synchronen Signalübertragung zwischen zwei Logik-/Speicherbausteinen bekannt. Das interne Taktsignal eines Bausteins wird als Referenztakt für einen sendenden Baustein verwendet. Der Referenztakt wird derart bearbeitet, dass das gesendete Signal zum internen Takt des Empfängerbausteines synchron ist.

Aus der EP 1 434 382 A1 ist ein Verfahren zur zeitlichen Signalkalibrierung zwischen einem Master- und einem oder mehreren Slave-Einheiten bekannt. Dabei wird in serieller Datenübertragung zunächst von der Master-Einheit ein Startsignal gesendet, daraufhin sendet der Slave an den Master ein sogenanntes "Synchronization Field", mittels dem die Master-Einheit eine Zeitliche Synchronisierung des Datentransfers vornehmen kann.

Zur Einhaltung von vorgeschriebenen Toleranzen werden vergleichsweise genaue Taktgeber für die Sende-/Empfangsbausteine, insbesondere aber für eine Schnittstelle benötigt, die zwischen den Bausteinen geschaltet sein kann. Anderseits ist es aus Kostenvorgaben erforderlich, einen Kompromiss zwischen der gewünschten Genauigkeit und den Bauteilstückkosten zu finden.

Bei Verwendung von vergleichsweise einfachen und daher kostengünstigen Bauelementen mit größeren Toleranzen, etwa bei Ultraschalsensoren, kann die Messgenauigkeit bei der Signalübertragung negativ beeinflusst werden.

Offenbarung der Erfindung

Eine Aufgabe der Erfindung ist es, ein Verfahren zur zeitlichen Signalkalibrierung zwischen einem ersten Sende-/Empfangsbaustein und mindestens einem zweiten Sende-/Empfangsbaustein anzugeben, dass auch bei einem relativ ungenauen Grundtakt ausreichend gut arbeitet.

Die Aufgabe kann durch das Verfahren gemäß Patentanspruch 1 gelöst werden. Das Verfahren erlaubt eine zeitliche Signalkalibrierung zwischen einem ersten Sende-/Empfangsbaustein (SG), etwa einem Steuergerät und mindestens einem zweiten Sende-/Empfangsbaustein, der erfindungsgemäß als Ultraschallsensor ausgebildet ist, wobei der erste und der zweite Sende-/Empfangsbaustein über mindestens eine bidirektionale Datenschnittstelle miteinander verbunden sein können. Der erste Sende-/Empfangsbaustein (SG) stellt ein extern oder intern erzeugtes erste Zeiteinheit $(t_{SG})$ und der zweite Sende-/Empfangsbaustein (Sen) ein internes Taktsignal $(t_{Sen})$ bereit. Es werden die folgenden Verfahrensschritte verwendet:

a) Senden einer definierten Signalfolge $(t_{1\_SG}; t_{SG\_sent\_1})$ von dem ersten Sende-/Empfangsbaustein (SG) zu dem zweiten Sende-/Empfangsbaustein (Sen); b) Empfangen der Signalfolge $(t_{1\_Sen}; t_{SG\_receive\_1})$ durch den zweiten Sende-/Empfangsbaustein (Sen); c) Senden einer definierten Antwortsignalfolge $(f^*t_{Sen}, g^* t_{Sen}; m^* t_{Sen}, n^* t_{Sen})$ von dem zweiten Sende-/Empfangsbaustein (Sen) zu dem ersten Sende-/Empfangsbaustein (SG); d) Empfangen der Antwortsignalfolge $(f^*t_{Sen}, g^* t_{Sen}; m^* t_{Sen}, n^* t_{Sen})$ und Messung zeitlicher Merkmale $(t_{2\_SG}, t_{3\_SG}, ..., t_{5\_SG}; t_{SG\_receive\_2}, t_{SG\_receive\_3})$ der Antwortsignalfolge $(f^*t_{Sen}, g^* t_{Sen}; m^* t_{Sen}, n^* t_{Sen})$ durch den ersten Sende-/Empfangsbaustein (SG) und schließlich e) Ermittlung von zeitlichen Korrekturfaktoren $(t_{Sen}, x, y, Z, w)$.

Der erste Sende-/Empfangsbaustein ermittelt während des Betriebs den internen Grundtakt des zweiten Sende-/Empfangsbausteins (Schritt a) bis d)) und korrigiert die empfangenden Daten für die weitere Signalverarbeitung (nach Schritt e)). Erfindungsgemäß ermittelt der erste Sende-/Empfangsbaustein Flankensteilheiten $y_1$, $y_2$, $z_1$ und $z_2$ der Datenübertragung und kompensiert diese auf geeignete zum Beispiel in den Unteransprüchen genannte Weise.

Mit anderen Worten lässt sich dass Verfahren kursorisch wie folgt beschreiben: Der erste Sende-/Empfangsbaustein sendet eine definierte Signalfolge mit definierter Dauer. Der zweite Sende-/Empfangsbaustein antwortet darauf wiederum mit einer definierten Antwortsignalfolge mit definierter Dauer. Der erste Sende-/Empfangsbaustein wertet zeitliche Merkmale der empfangenen Botschaften aus und leitet daraus Korrekturen ab. Für die Korrekturen ist es im gewissen Rahmen unwichtig, wie genau der externe oder interne Taktgeber des ersten Sende-/Empfangsbaustein ist, da die Kalibrierung nur eine Skalierung für den zweiten Sende-/Empfangsbaustein benutzt. Dies gilt auch dann, wenn eine Mehrzahl von zweiten Sende-/Empfangsbausteinen mit dem ersten Sende-/Empfangsbaustein über mindestens eine Datenschnittstelle verbunden ist. Die Zeitbasis des ersten Sende-/Empfangsbaustein kann insbesondere bei Verwendung des Verfahrens bei der Ultraschallmessung genutzt werden.

Auf vorteilhafte Weise können deshalb Schaltungen mit zwei Sende-/Empfangsbausteinen relativ ungenauen Grundtakts realisiert werden. Dadurch werden teure Komponenten bei den zweiten Sende-/Empfangsbausteinen eingespart, die dennoch hohen Anforderungen an die Genauigkeit der Datenübertragung genügen. Ferner werden teure Komponenten bei dem ersten und den zweiten Sende-/Empfangsbaustein(en) eingespart, da Toleranzen im Übertragungskanal kompensiert werden.

Erfindungsgemäß sind Parameterwerte des zweiten Sende-/Empfangsbausteins, zum Beispiel definierte Vielfache einer internen Zeiteinheit (Takt), dem ersten Sende-/Empfangsbaustein offenbart. Insbesondere können die Parameterwerte in einem Speicher des ersten Sende-/Empfangsbausteins gespeichert sein.

In einer weiteren Ausführung wird die Antwortsignalfolge (Schritt b)) mit einer ersten Botschaft mit einer ersten Zeit $f*t_{Sen}$ nach Beginn von Schritt a) mit einer ersten Länge $m*t_{Sen}$ und eine zweite Botschaft mit einer zweiten Zeit $g*t_{Sen}$ nach Ende von Schritt a) mit einer zweiten Länge $n*t_{Sen}$ nach Beginn der ersten Botschaft gesendet. Mit Hilfe der von dem ersten Sende-/Empfangsbaustein gemessenen Zeiten können alle relevanten Korrekturfaktoren ermittelt werden.

Die Korrekturfaktoren lassen sich besonders vorteilhaft unter Verwendung einer oder mehrerer der folgenden Formeln ermitteln:

$$(1) \qquad t_{Sen} = \frac{t_{5SG} - t_{4SG}}{n - m} ,$$

$$(2) \qquad y = t_{5SG} - n * t_{Sen} = t_{5SG} - n * \frac{t_{5SG} - t_{4SG}}{n - m} ,$$

$$(3) \qquad w = t_{2SG} - f * t_{Sen} ,$$

$$(4) \qquad z = t_{2SG} - t_{3SG} + (g - f) * t_{Sen} ,$$

Dabei sind $t_{2SG}$ bis $t_{5SG}$ gemessene Zeiten, z der Zeitversatz bei Schritt b), und y der Zeitversatz bei Schritt d). Mit $y = y_2 - y_1$, $z = z_1 - z_2$ und $w = z_1 + y_1$ ist mit Zeitversatz $z_1$ und $y_1$ zu Beginn und $z_2$ und $y_2$ zu Ende des jeweiligen Signals ermittelt. Der Zeitversatz bezieht sich auf die ansteigende oder absteigende Flanke, und wird vorzugsweise definiert als Zeit zwischen Signalbeginn (Knickpunkt) bis zum Erreichen eines Schwellenwertes auf der abfallenden bzw. ansteigenden Flanke.

Das Verfahren kann dadurch weitergebildet sein, dass die Länge einer Botschaft der gesendeten Signalfolge mittels der Korrekturfaktoren unter Verwendung von

$$(5) \qquad t_{SG\_sent\_1} = t_{Sen\_receive\_1} + z_1 - z_2 = t_{Sen\_receive\_1} + z$$

derart wählbar ist, das der zweite Sende-/Empfangsbaustein eine Botschaft mit definierter Länge empfängt.

Das Verfahren kann dadurch weitergebildet sein, dass der Zeitversatz und die Länge einer Botschaft der Antwortsignalfolge mittels

$$(6) \qquad x_{sent\_2} = \frac{t_{SG\_receive2} - w}{t_{Sen}}$$

und

$$(7) \qquad x_{sent\_3} = \frac{t_{SG\_receive3} - y}{t_{Sen}}$$

ermittelt wird, wobei $t_{SG\_receive2}$ und $t_{SG\_receive3}$ vom ersten Sende-/Empfangsbaustein ermittelte Zeiten sind.

Die Aufgabe kann des weiteren durch das Verfahren gemäß Patentanspruch 6 gelöst werden. Das Verfahren erlaubt eine zeitliche Signalkalibrierung zwischen einem ersten Sende-/Empfangsbaustein (SG), etwa einem Steuergerät und mindestens einem zweiten Sende-/Empfangsbaustein, der erfindungsgemäß als Ultraschallsensor ausgebildet ist, wobei der erste und der zweite Sende-/Empfangsbaustein über mindestens eine Datenschnittstelle miteinander verbunden sein können. Der zweite Sende-/Empfangsbaustein (Sen) stellt ein internes Taktsignal ($t_{Sen}$) bereit. Es werden die folgenden Verfahrensschritte verwendet:

a) Senden einer definierten Signalfolge ($m^* t_{Sen}$, $n^* t_{Sen}$) von dem zweiten Sende-/Empfangsbaustein (Sen) zu dem ersten Sende-/Empfangsbaustein (SG); b) Empfangen der Ssignalfolge ($m^* t_{Sen}$, $n^* t_{Sen}$) und Messung zeitlicher Merkmale ($t_{4\_SG}$, $t_{5\_SG}$;) der Signalfolge ($m^* t_{Sen}$, $n^* t_{Sen}$) durch den ersten Sende-/Empfangsbaustein (SG) und schließlich c) Ermittlung von zeitlichen Korrekturfaktoren ($t_{Sen}$, y).

Mit dieser Signalfolge des zweite Sende-/Empfangsbausteins (Sen) können die Korrekturfaktoren $t_{Sen}$ und y ermittelt werden. Hierfür ist eine Signalfolge des ersten Sende-/Empfangsbausteins (SG) nicht erforderlich. Beispielsweise kann die Signalfolge nach einem Power-On-Reset des zweiten Sende-/Empfangsbausteins (Sen) gesendet werden.

Der Korrekturfaktor $t_{Sen}$ lässt sich besonders vorteilhaft unter Verwendung der Formel (1) ermitteln.

Der Korrekturfaktor y lässt sich besonders vorteilhaft unter Verwendung der folgenden Formeln ermitteln:

$$(2) \qquad y = t_{5SG} - n^* t_{Sen} = t_{5SG} - n^* \frac{t_{5SG} - t_{4SG}}{n - m}, \text{ bzw.}$$

$$y = t_{4SG} - m^* t_{Sen} = t_{4SG} - m^* \frac{t_{5SG} - t_{4SG}}{n - m}$$

Zudem wird ein Sende-/Empfangsschaltung zur Ausführung der Verfahren vorgeschlagen, der einen ersten Sende-/Empfangsbaustein und mindestens einen zweiten Sende-/Empfangsbaustein aufweist. Dabei kann der erste Sende-/Empfangsbaustein ein Steuergerät mit einem Speicher und/oder der zweite Sende-/Empfangsbaustein ein Sensorbaustein, insbesondere ein elektroakustischer Wandler sein.

In der genannten Sende-/Empfangsschaltung kann mindestens einer der Sende-/Empfangsbausteine (SG, Sen) als Logik-/Speicherbaustein realisiert sein.

Ferner ist gemäß einer Weiterbildung zwischen dem ersten und dem zweiten Sende-/Empfangsbaustein mindestens eine Datenschnittstelle angeordnet. Die Datenschnittstelle kann etwa für externe Messungen der übertragenen Signalfolgen verwendet werden und sollte daher entsprechend zugänglich sein.

Kurze Beschreibung der Zeichnungen

Nachstehend wird die Erfindung anhand der Zeichnungen beispielhaft näher erläutert. Es zeigt

Fig. 1 eine Schaltskizze einer bevorzugten Ausführungsform einer Sende-/Empfangsschaltung,

Fig. 2 eine Schaltskizze einer weiteren bevorzugten Ausführungsform einer Sende-/Empfangsschaltung,

Fig. 3 einen Ablaufplan für ein Signalkalibrierungsverfahren nach Anspruch 1,

Fig. 4 eine graphische Darstellung einer Signalfolge anliegend an einer Datenschnittstelle gemäß Fig. 1,

Fig. 5 eine graphische Darstellung einer weiteren Signalfolge anliegend an einer Datenschnittstelle gemäß Fig. 1, und

Fig. 6 eine graphische Darstellung einer weiteren Signalfolge anliegend an der Datenschnittstelle gemäß Fig. 1.

Fig. 7    eine graphische Darstellung einer Signalfolge zur Ermittlung der Korrekturfaktoren $t_{Sen}$ und y.

Fig. 8    eine graphische Darstellung einer weiteren Signalfolge zur Ermittlung der Korrekturfaktoren $t_{Sen}$ und y.

Detaillierte Beschreibung der Zeichnungen

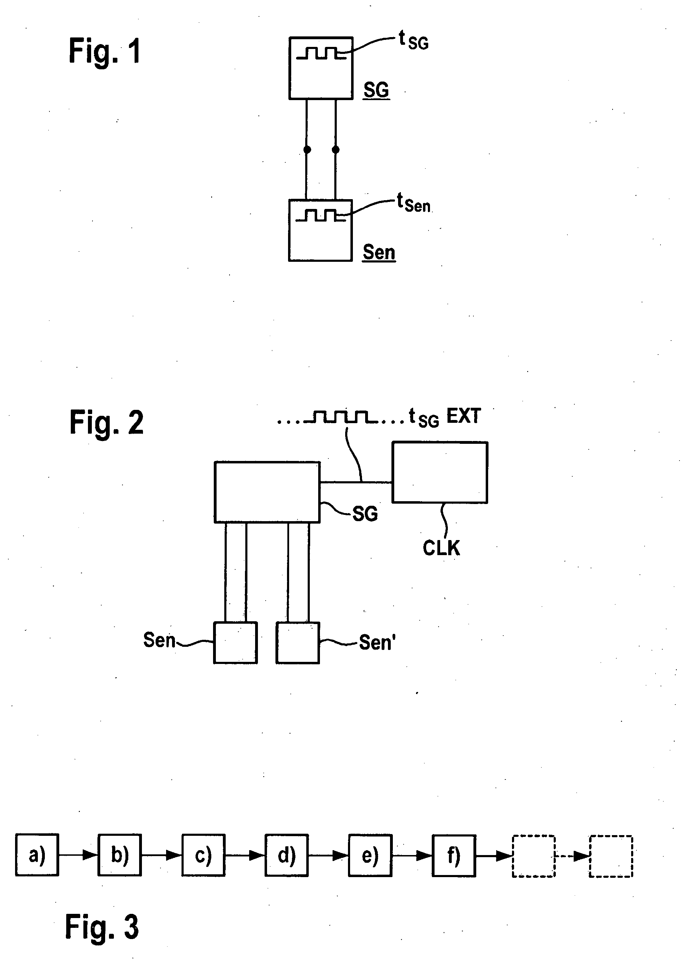

Fig. 1 zeigt eine erste Sende-/Empfangsschaltung geeignet zur Durchführung des in Anspruch 1 genannten Verfahrens zur zeitlichen Signalkalibrierung. Die Schaltung weist einen ersten Sende-/Empfangsbaustein SG in Form eines Steuergerätes und einen zweiten Sende-/Empfangsbaustein Sen in Form eines Ultraschallsensors auf. Der erste und der zweite Sende-/Empfangsbaustein sind über eine bidirektionale Datenschnittstelle (Punkte) miteinander verbunden. Der erste Sende-/Empfangsbaustein SG stellt ein erstes internes Taktsignal $t_{SG}$ und der zweite Sende-/Empfangsbaustein Sen ein zweites internes Taktsignal $t_{Sen}$ bereit.

Alternativ zeigt Fig. 2 eine weitere Sende-/Empfangsschaltung, die ebenfalls zur Durchführung des in Anspruch 1 genannten Verfahrens zur zeitlichen Signalkalibrierung geeignet ist. Bei dieser Schaltung wird dem ersten Sende-/Empfangsbaustein SG ein externes Taktsignal $t_{SG}$ EXT durch einen Taktgeber CLK zur Verfügung gestellt. Ferner steuert der erste Sende-/Empfangsbaustein SG zwei Sende-/Empfangsbausteine Sen und Sen'.

In Fig. 3 ist ein Ablaufschema für ein Kalibrierverfahren gezeigt, wobei das Verfahren mit der in Fig. 1 oder Fig. 2 gezeigten Schaltung ausgeführt werden kann. Zur zeitlichen Signalkalibrierung zwischen dem ersten Sende-/Empfangsbaustein SG und mindestens einem zweiten Sende-/Empfangsbaustein Sen wird in Schritt a) eine definierten Signalfolge $t_{1\_SG}$ von dem ersten Sende-/Empfangsbaustein SG zu dem zweiten Sende-/Empfangsbaustein Sen gesendet. Danach (Schritt b)) wird die Signalfolge von dem zweiten Sende-/Empfangsbaustein (Sen) empfangen. In Schritt c) wird eine definierte Antwortsignalfolge (f*$t_{Sen}$, g* $t_{Sen}$; m* $t_{Sen}$, n* $t_{Sen}$) von dem zweiten Sende-/Empfangsbaustein (Sen) zu dem ersten Sende-/Empfangsbaustein (SG) gesendet und in Schritt d) durch den ersten Sende-/Empfangsbaustein SG empfangen. Ferner findet eine Messung zeitlicher Merkmale ($t_{2\_SG}$, $t_{3\_SG}$,…, $t_{5\_SG}$; $t_{SG\_receive\_2}$, $t_{SG\_receive\_3}$) der Antwortsignalfolge durch den ersten Sende-/Empfangsbaustein SG statt. In Schritt e) werden relevante Korrekturfaktoren ($t_{Sen}$, x, y, z, w) ermittelt. In Schritt f) und gegebenenfalls weiteren Schritten werden die Signale ausgewertet und einer weiteren Signalverarbeitung zugeführt.

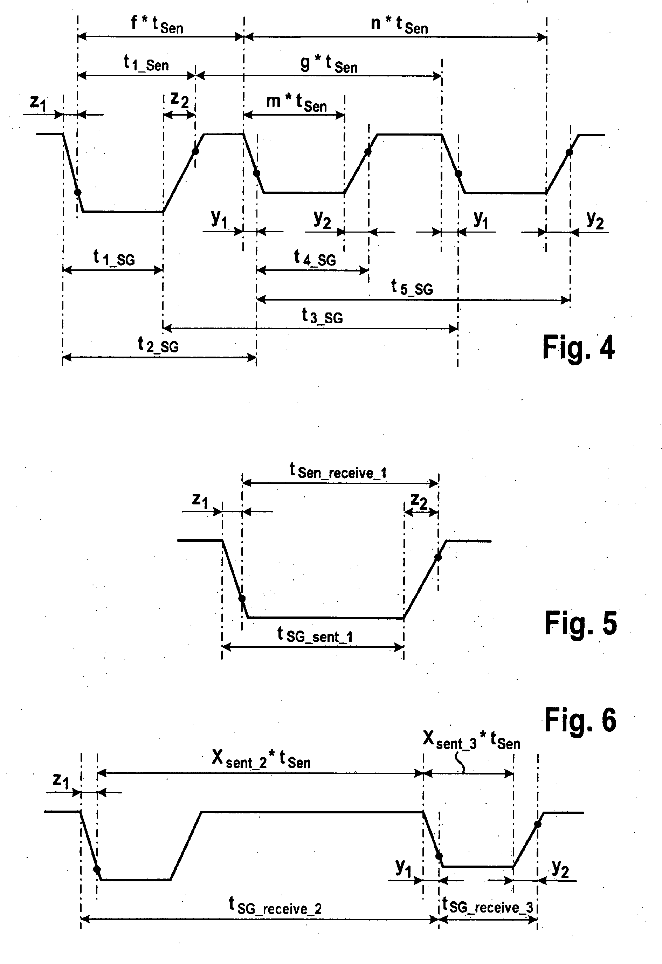

In Fig. 4 ist beispielhaft und schematisch eine erste Signalfolge gezeigt, wie sie an einer Datenschnittstelle gemäß Fig. 1 anliegen kann. Um die Toleranzen in einem Übertragungskanal (z.B. Flankensteilheiten) oder die Abweichungen eines internen Taktgebers des zweiten Sende-/Empfangsbausteins zu kalibrieren, sendet ein Steuergerät als erster Sende-/Empfangsbaustein ein Signal mit einer definierten Dauer $t_{1\_SG}$. Aufgrund der Flankensteilheiten empfängt der zweite Sende-/Empfangsbaustein Sen, etwa in Form eines Ultraschallsensors mit internem Taktgeber (Fig. 1 od. Fig. 2), den Beginn dieses Signals um die Zeitdauer $z_1$ und das Signalende um die Zeitdauer $z_2$ zeitversetzt. Der Sensor Sen antwortet auf dieses Signal mit einer definierten Antwortsignalfolge. Die erste Botschaft dieser Antwortsignalfolge beginnt nach einer definierten Dauer f*$t_{Sen}$ und dauert m*$t_{Sen}$. Die zweite Botschaft dieser Antwortsignalfolge beginnt nach einer definierten Dauer g*$t_{Sen}$ nach Ende der Botschaft, die das Steuergerät SG an den Sensor Sen gesendet hat. Die zweite Botschaft endet nach einer definierten Zeit n*$t_{Sen}$ nach Beginn der ersten Sensorbotschaft. Dabei sind die Parameter f, g, m und n definierte Vielfache einer sensorinternen Zeiteinheit. Die Parameter sind im Speicher des Steuergerätes SG gespeichert oder werden diesem bei Bedarf zur Verfügung gestellt. Zu erkennen ist, dass das Steuergerät den Beginn der Antwortsignalfolge, insbesondere der Sensorbotschaft jeweils um die Zeitdauer $y_1$ und das Signalende um die Zeitdauer $y_2$ versetzt empfängt.

Mithilfe der vom Steuergerät SG gemessenen Zeiten $t_{2\_SG}$, $t_{3\_SG}$,…, $t_{5\_SG}$ ist es möglich, alle relevanten Korrekturfaktoren zu ermitteln, wobei lediglich aus Vereinfachungsgründen einige Flankenkombinationen zusammengefasst werden mit $y = y_2 - y_1$, $z = z_1 - z_2$ und $w = z_1 + y_1$. Die Korrekturfaktoren ergeben sich aus

$$(1) \qquad t_{Sen} = \frac{t_{5SG} - t_{4SG}}{n - m},$$

$$(2) \qquad y = t_{5SG} - n * t_{Sen} = t_{5SG} - n * \frac{t_{5SG} - t_{4SG}}{n - m},$$

$$(3) \qquad w = t_{2SG} - f * t_{Sen},$$

und

$$(4) \qquad z = t_{2SG} - t_{3SG} + (g - f) * t_{Sen}.$$

Es versteht sich, dass die Erfindung nicht auf die Verwendung der oben genannten Korrekturfaktoren und ebenso nicht auf die in den Figuren 4 bis 6 gezeigten Signalfolgen beschränkt ist.

Es wird ferner angenommen, dass sich die Flankensteilheiten (Zeiten $y_2$, $y_1$, $z_1$ und $z_2$) als auch die sensorinternen Zeiteinheiten bzw. Grundtakte nur sehr langsam ändern und zwischen zwei Kalibrierungen nahezu konstant sind.

Fig. 5 zeigt anschaulich, dass die Länge einer Botschaft $t_{SG\_sent\_1}$ der gesendeten Signalfolge mittels der Korrekturfaktoren z, $z_1$ und $z_2$ unter Verwendung der Formel

$$t_{SG\_sent\_1} = t_{Sen\_receive\_1} + z_1 - z_2 = t_{Sen\_receive\_1} + z$$

derart wählbar ist, das der zweite Sende-/Empfangsbaustein Sen eine Botschaft $t_{Sen\_receive\_1}$ mit definierter Länge empfängt.

Schließlich zeigt Fig. 6 wie der Zeitversatz $x_{sent\_2}$ und die Länge $x_{sent\_3}$ einer Botschaft der Antwortsignalfolge mittels der Formeln

$$x_{sent\_2} = \frac{t_{SG\_receive2} - w}{t_{Sen}}$$

und

$$x_{sent\_3} = \frac{t_{SG\_receive3} - y}{t_{Sen}}$$

bestimmbar ist, wobei $t_{SG\_receive2}$ und $t_{SG\_receive3}$ vom ersten Sende-/Empfangsbaustein ermittelte Zeiten sind.

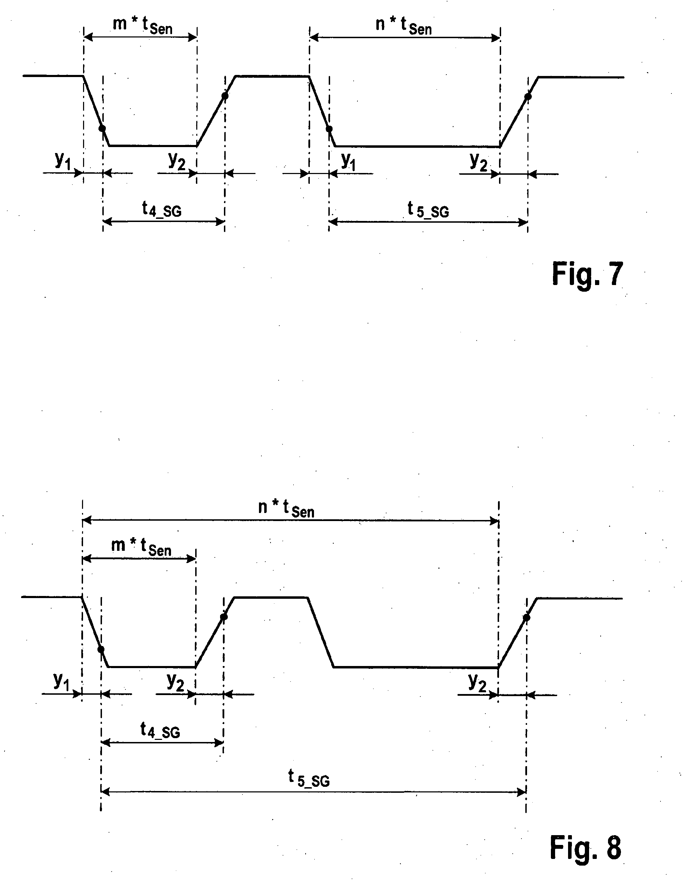

In Fig. 7 ist beispielhaft und schematisch eine Signalfolge zur Ermittlung der Korrekturfaktoren $t_{Sen}$ und y dargestellt. Der Sensor Sen sendet ein Signal mit einer definierten Signalfolge. Die erste Botschaft dieser Signalfolge dauert $m*t_{Sen}$. Die zweite Botschaft beginnt nach Abschluss der ersten Botschaft und endet nach einer definierten Zeit $n*t_{Sen}$. Dabei sind die Parameter m und n definierte Vielfache einer sensorinternen Zeiteinheit. Die Parameter sind im Speicher des Steuergerätes SG gespeichert oder werden diesem bei Bedarf zur Verfügung gestellt. Erneut ist zu erkennen, dass das Steuergerät den Beginn der Antwortsignalfolge, insbesondere der Sensorbotschaft jeweils um die Zeitdauer $y_1$ und das Signalende um die Zeitdauer $y_2$ versetzt empfängt.

Anhand der vom Steuergerät SG gemessenen Zeiten $t_{4\_SG}$, $t_{5\_SG}$ ist es möglich, die Korrekturfaktoren $t_{Sen}$ und y zu ermitteln, wobei die Flankenkombination wie oben dargestellt aus Vereinfachungsgründen zusammengefasst wird. Die Korrekturfaktoren ergeben sich aus

$$(1) \qquad t_{Sen} = \frac{t_{5SG} - t_{4SG}}{n - m},$$

und

$$(2) \qquad y = t_{5SG} - n * t_{Sen} = t_{5SG} - n * \frac{t_{5SG} - t_{4SG}}{n - m}, \text{ bzw.}$$

$$y = t_{4SG} - m * t_{Sen} = t_{4SG} - m * \frac{t_{5SG} - t_{4SG}}{n - m}$$

In Fig. 8 ist beispielhaft und schematisch eine alternative Signalfolge zur Ermittlung der Korrekturfaktoren $t_{Sen}$ und y dargestellt. Im Unterschied zu der in Figur 7 gezeigten Signalfolge endet die zweite Botschaft der Signalfolge hier nach einer definierten Zeit $n*t_{Sen}$ nach Beginn der ersten Sensorbotschaft. Die Berechnung der Korrekturfaktoren $t_{Sen}$

und y erfolgt mittels der zu Figur 7 genannten Formeln.

**Patentansprüche**

1. Verfahren zur zeitlichen Signalkalibrierung zwischen einem ersten Sende-/Empfangsbaustein (SG) und mindestens einem zweiten Sende-/Empfangsbaustein (Sen) in Form eines Ultraschallsensors, wobei der erste und der zweite Sende-/Empfangsbaustein über mindestens eine bidirektionale Datenschnittstelle miteinander verbunden sind, und wobei der erste Sende-/Empfangsbaustein (SG) ein erstes Taktsignal und der zweite Sende-/Empfangsbaustein (Sen) ein zweites internes Taktsignal bereitstellt, mit den Verfahrensschritten:

   a) Senden einer definierten Signalfolge von dem ersten Sende-/Empfangsbaustein (SG) zu dem zweiten Sende-/Empfangsbaustein (Sen);
   b) Empfangen der Signalfolge durch den zweiten Sende-/Empfangsbaustein (Sen);
   c) Senden einer definierten Antwortsignalfolge von dem zweiten Sende-/Empfangsbaustein (Sen) zu dem ersten Sende-/Empfangsbaustein (SG);
   d) Empfangen der Antwortsignalfolge und Messung zeitlicher Merkmale der Antwortsignalfolge durch den ersten Sende-/Empfangsbaustein (SG);
   e) Ermittlung von zeitlichen Korrekturfaktoren aus den gemessenen zeitlichen Merkmalen der empfangenen Antwortsignalfolge,

   wobei das Verfahren **dadurch gekennzeichnet ist, daß** Parameterwerte des zweiten Sende-/Empfangsbausteins (Sen) dem ersten Sende-/Empfangsbaustein (SG) offenbart sind, wobei die Parameterwerte definierte Vielfache einer internen Zeiteinheit des zweiten Sende-/Empfangsbausteins (Sen) sind und wobei der erste Sende-/Empfangsbaustein (SG) Flankensteilheiten der Datenübertragung ermittelt und kompensiert.

2. Verfahren nach Anspruch 1, wobei die Antwortsignalfolge in Schritt c) mit einer ersten Botschaft mit einer ersten Zeit, $f*t_{Sen}$, nach Beginn von Schritt a) mit einer ersten Länge, $m*t_{Sen}$, und eine zweite Botschaft mit einer zweiten Zeit, $g*t_{Sen}$, nach Ende von Schritt a) mit einer zweiten Länge, $n*t_{Sen}$, nach Beginn der ersten Botschaft gesendet wird.

3. Verfahren nach einem der Ansprüche 1 oder 2, wobei die zeitlichen Korrekturfaktoren unter Verwendung mindestens einer der folgenden Formeln (1) bis (4) ermittelt wird:

$$(1) \quad t_{Sen} = \frac{t_{5SG} - t_{4SG}}{n - m},$$

$$(2) \quad y = t_{5SG} - n * t_{Sen} = t_{5SG} - n * \frac{t_{5SG} - t_{4SG}}{n - m}$$

oder

$$y = t_{4SG} - m * t_{Sen} = t_{4SG} - m * \frac{t_{5SG} - t_{4SG}}{n - m},$$

$$(3) \quad w = t_{2SG} - f * t_{Sen},$$

$$(4) \quad z = t_{2SG} - t_{3SG} + (g - f) * t_{Sen},$$

wobei $t_{2SG}$ bis $t_{5SG}$ gemessene Zeiten sind, z der Zeitversatz bei Schritt b) und y der Zeitversatz bei Schritt d) ist,

wobei gilt $y=y_2-y_1$, $z=z_1-z_2$ und $w=z_1+y_1$ mit Zeitversatz $z_1$ und $y_1$ zu Beginn und Zeitversatz $z_2$ und $y_2$ zum Ende des jeweiligen Signals, und wobei als Zeitversatz die Zeit zwischen einem Signalbeginn bis zum Erreichen eines Schwellenwertes der abfallenden bzw. ansteigenden Flanke des Signals herangezogen wird.

4. Verfahren nach Anspruch 1 bis 3, wobei die Länge einer Botschaft, $t_{SG\_sent\_1}$, der gesendeten Signalfolge mittels der Korrekturfaktoren, z, $z_1$ und $z_2$, unter Verwendung von

$$(5) \quad t_{Sen\_sent\_1} = t_{Sen\_receive\_1} + z_1 - z_2 = t_{Sen\_receive\_1} + z$$

derart wählbar ist, das der zweite Sende-/Empfangsbaustein eine Botschaft mit definierter Länge $t_{SG\_releive\_1}$ empfängt.

5. Verfahren nach Anspruch 1 bis 4, wobei der Zeitversatz, $x_{sent\_2}$, und die Länge, $x_{sent\_3}$, einer Botschaft der Antwortsignalfolge mittels

$$(6) \quad x_{sent\_2} = \frac{t_{SG\_receive2} - w}{t_{Sen}}$$

und

$$(7) \quad x_{sent\_3} = \frac{t_{SG\_receive3} - y}{t_{Sen}}$$

ermittelt wird, wobei $t_{SG\_receive2}$ und $t_{SG\_receive3}$ vom ersten Sende-/Empfangsbaustein ermittelte Zeiten sind.

6. Verfahren zur zeitlichen Signalkalibrierung zwischen einem ersten Sende-/Empfangsbaustein (SG), etwa einem Steuergerät und mindestens einem zweiten Sende-/Empfangsbaustein (Sen), in Form eines Ultraschallsensor, wobei der erste und der zweite Sende-/Empfangsbaustein über mindestens eine Datenschnittstelle miteinander verbunden sind, wobei der zweite Sende-/Empfangsbaustein (Sen) ein internes Taktsignal (tSen) bereit stellt, mit den Verfahrensschritten:

a) Senden einer definierten Signalfolge von dem zweiten Sende-/Empfangsbaustein (Sen) zu dem ersten Sende-/Empfangsbaustein (SG);
b) Empfangen der Signalfolge und Messung zeitlicher Merkmale der Signalfolge durch den ersten Sende-/Empfangsbaustein (SG) und schließlich
c) Ermittlung von zeitlichen Korrekturfaktoren aus gemessenen zeitlichen Merkmalen der empfangenen Signalfolge,

wobei das Verfahren **dadurch gekennzeichnet ist, daß** Parameterwerte des zweiten Sende-/Empfangsbausteins (Sen) dem ersten Sende-/Ernpfangsbaustein (SG) offenbart sind, wobei die Parameterwerte definierte Vielfache einer internen Zeiteinheit des zweiten Sende-/Empfangsbausteins sind und wobei der erste Sende-/Empfangsbaustein (SG) Flankensteilheiten der Datenübertragung ermittelt und kompensiert.

7. Sende-/Empfangsschaltung zur Ausführung des Verfahrens nach einem der Ansprüche 1 bis 6, aufweisend einen ersten Sende-/Empfangsbaustein (SG) und mindestens einen zweiten Sende-/Empfangsbaustein (Sen).

8. Sende-/Empfangsschaltung nach Anspruch 7, wobei der erste Sende-/Empfangsbaustein ein Steuergerät mit einem Speicher ist.

9. Sende-/Empfangsschaltung nach einem der Ansprüche 7 oder 8, wobei mindestens einer der Sende-/Empfangsbausteine (SG, Sen) ein Logik-/Speicherbaustein ist.

**10.** Sende-/Empfangsschaltung nach einem der Ansprüche 7 bis 9, wobei zwischen dem ersten und dem zweiten Sende-/Empfangsbaustein mindestens eine Datenschnittstelle angeordnet ist.

**11.** Verwendung einer Sende-/Empfangsschaltung nach den Ansprüchen 7 bis 10 als Schaltung für eine Einparkhilfe für ein Kraftfahrzeug.

**Claims**

**1.** Method for temporal signal calibration between a first transmitting/receiving module (SG) and at least one second transmitting/receiving module (Sen) in the form of an ultrasonic sensor, the first and second transmitting/receiving modules being connected to one another via at least one bidirectional data interface, and the first transmitting/receiving module (SG) providing a first clock signal and the second transmitting/receiving module (Sen) providing a second internal clock signal, having the following method steps:

a) a defined signal sequence is transmitted from the first transmitting/receiving module (SG) to the second transmitting/receiving module (Sen);
b) the signal sequence is received by the second transmitting/receiving module (Sen);
c) a defined response signal sequence is transmitted from the second transmitting/receiving module (Sen) to the first transmitting/receiving module (SG);
d) the response signal sequence is received and temporal features of the response signal sequence are measured by the first transmitting/receiving module (SG);
e) temporal correction factors are determined from the measured temporal features of the received response signal sequence,

the method being **characterized in that** parameter values of the second transmitting/receiving module (Sen) are disclosed to the first transmitting/receiving module (SG), the parameter values being defined multiples of an internal time unit of the second transmitting/receiving module (Sen), and the first transmitting/receiving module (SG) determining and compensating for edge steepnesses of the data transmission.

**2.** Method according to Claim 1, the response signal sequence in step c) being transmitted with a first message at a first time, $f*t_{Sen}$, after the start of step a) with a first length, $m*t_{Sen}$, and a second message being transmitted at a second time, $g*t_{Sen}$, after the end of step a) with a second length, $n*t_{Sen}$, after the start of the first message.

**3.** Method according to either of Claims 1 and 2, the temporal correction factors being determined using at least one of the following formulas (1) to (4):

$$(1) \quad t_{Sen} = \frac{t_{5SG} - t_{4SG}}{n - m} \, ,$$

$$(2) \quad y = t_{5SG} - n*t_{Sen} = t_{5SG} - n*\frac{t_{5SG} - t_{4SG}}{n - m}$$

or

$$y = t_{4SG} - m*t_{Sen} = t_{4SG} - m*\frac{t_{5SG} - t_{4SG}}{n - m} \, ,$$

$$(3) \quad w = t_{2SG} - f*t_{Sen} \, ,$$

$$( 4 ) \quad z = t_{2SG} - t_{3SG} + (g - f) * t_{Sen} ,$$

where $t_{2SG}$ to $t_{5SG}$ are measured times, z is the time offset in step b) and y is the time offset in step d), where $y=y_2-y_1$, $z=z_1-z_2$ and $w=z_1+y_1$ with time offsets $z_1$ and $y_1$ at the start and time offsets $z_2$ and $y_2$ at the end of the respective signal, and where the time between the start of a signal and the reaching of a threshold value of the falling or rising edge of the signal is used as the time offset.

4. Method according to Claims 1 to 3, the length of a message, $t_{SG\_sent\_1}$, in the transmitted signal sequence being able to be selected by means of the correction factors, z, $z_1$ and $z_2$, using

$$( 5 ) \quad t_{Sen\_sent\_1} = t_{Sen\_receive\_1} + z_1 - z_2 = t_{Sen\_receive\_1} + z$$

in such a manner that the second transmitting/receiving module receives a message with a defined length $t_{SG\_receive\_1}$.

5. Method according to Claims 1 to 4, the time offset, $x_{sent\_2}$, and the length, $x_{sent\_3}$, of a message in the response signal sequence being determined using

$$( 6 ) \quad x_{sent\_2} = \frac{t_{SG\_receive2} - w}{t_{Sen}}$$

and

$$( 7 ) \quad x_{sent\_3} = \frac{t_{SG\_receive3} - y}{t_{Sen}} ,$$

$t_{SG-receive2}$ and $t_{SG\_receive3}$ being times determined by the first transmitting/receiving module.

6. Method for temporal signal calibration between a first transmitting/receiving module (SG), for instance a control device, and at least one second transmitting/receiving module (Sen) in the form of an ultrasonic sensor, the first and second transmitting/receiving modules being connected to one another via at least one data interface, and the second transmitting/receiving module (Sen) providing an internal clock signal (tSen), having the following method steps:

a) a defined signal sequence is transmitted from the second transmitting/receiving module (Sen) to the first transmitting/receiving module (SG);
b) the signal sequence is received and temporal features of the signal sequence are measured by the first transmitting/receiving module (SG), and finally
c) temporal correction factors are determined from measured temporal features of the received signal sequence,

the method being **characterized in that** parameter values of the second transmitting/receiving module (Sen) are disclosed to the first transmitting/receiving module (SG), the parameter values being defined multiples of an internal time unit of the second transmitting/receiving module, and the first transmitting/receiving module (SG) determining and compensating for edge steepnesses of the data transmission.

7. Transmitting/receiving circuit for carrying out the method according to one of Claims 1 to 6, having a first transmitting/receiving module (SG) and at least one second transmitting/receiving module (Sen).

8. Transmitting/receiving circuit according to Claim 7, the first transmitting/receiving module being a control device with a memory.

9. Transmitting/receiving circuit according to either of Claims 7 and 8, at least one of the transmitting/receiving modules (SG, Sen) being a logic/memory module.

10. Transmitting/receiving circuit according to one of Claims 7 to 9, at least one data interface being arranged between the first and second transmitting/receiving modules.

11. Use of a transmitting/receiving circuit according to Claims 7 to 10 as a circuit for a parking aid for a motor vehicle.

**Revendications**

1. Procédé d'étalonnage temporel de signaux entre un premier module émetteur/récepteur (SG) et au moins un deuxième module émetteur/récepteur (Sen) sous la forme d'un capteur à ultrasons, le premier et le deuxième module émetteur/récepteur étant connectés l'un à l'autre par le biais d'au moins une interface de données bidirectionnelle, et le premier module émetteur/récepteur (SG) fournissant un premier signal d'horloge et le deuxième module émetteur/récepteur (Sen) fournissant un deuxième signal d'horloge interne, comprenant les étapes de procédé suivantes :

   a) envoi d'une séquence de signaux définie par le premier module émetteur/récepteur (SG) au deuxième module émetteur/récepteur (Sen) ;
   b) réception de la séquence de signaux par le deuxième module émetteur/récepteur (Sen) ;
   c) envoi d'une séquence de signaux de réponse définie par le deuxième module émetteur/récepteur (Sen) au premier module émetteur/récepteur (SG) ;
   d) réception de la séquence de signaux de réponse et mesure de caractéristiques temporelles de la séquence de signaux de réponse par le premier module émetteur/récepteur (SG) ;
   e) détermination de facteurs de correction temporels à partir des caractéristiques temporelles mesurées de la séquence de signaux de réponse reçue,

   le procédé étant **caractérisé en ce que** des valeurs de paramètres du deuxième module émetteur/récepteur (Sen) sont fournies au premier module émetteur/récepteur (SG), les valeurs de paramètres étant des multiples définis d'une unité de temps interne du deuxième module émetteur/récepteur (Sen) et le premier module émetteur/récepteur (SG) déterminant et compensant des pentes de flancs de la transmission des données.

2. Procédé selon la revendication 1, dans lequel la séquence de signaux de réponse à l'étape c) est envoyée avec un premier message avec un premier temps, $f{*}t_{Sen}$, après le début de l'étape a) avec une première longueur, $m{*}t_{Sen}$, et un deuxième message est envoyé avec un deuxième temps, $g{*}t_{Sen}$, après la fin de l'étape a) avec une deuxième longueur, $n{*}t_{Sen}$, après le début du premier message.

3. Procédé selon l'une quelconque des revendications 1 ou 2, dans lequel les facteurs de correction temporels sont déterminés en utilisant au moins l'une des formules suivantes (1) à (4) :

$$(1) \quad t_{Sen} = \frac{t_{5SG} - t_{4SG}}{n - m},$$

$$(2) \quad y = t_{5SG} - n * t_{Sen} = t_{5SG} - n * \frac{t_{5SG} - t_{4SG}}{n - m}$$

ou

$$y = t_{4SG} - m * t_{Sen} = t_{4SG} - m * \frac{t_{5SG} - t_{4SG}}{n - m},$$

$$(3) \quad w = t_{2SG} - f * t_{Sen},$$

$$(4) \quad z = t_{2SG} - t_{3SG} + (g - f) * t_{Sen},$$

$t_{2SG}$ à $t_{5SG}$ étant les temps mesurés, z étant le décalage temporel à l'étape b) et y étant le décalage temporel à l'étape d), et l'on a $y = y_2 - y_1$, $z = z_1 - z_2$ et $w = z_1 + y_1$, avec le décalage temporel $z_1$ et $y_1$ au début et le décalage temporel $z_2$ et $y_2$ à la fin du signal respectif, et le temps entre un début de signal et l'obtention de la valeur seuil du flanc descendant ou montant du signal étant utilisé en tant que décalage temporel.

4. Procédé selon les revendications 1 à 3, dans lequel la longueur d'un message, $t_{SG\_sent\_1}$, de la séquence de signaux envoyée peut être sélectionnée au moyen des facteurs de correction, z, $z_1$ et $z_2$, en utilisant

$$(5) \quad t_{Sen\_sent\_1} = t_{Sen\_receive\_1} + z_1 - z_2 = t_{Sen\_receive\_1} + z,$$

de telle sorte que le deuxième module émetteur/récepteur reçoive un message d'une longueur définie $t_{SG\_receive\_1}$.

5. Procédé selon les revendications 1 à 4, dans lequel le décalage temporel, $x_{sent\_2}$, et la longueur, $x_{sent\_3}$, d'un message de la séquence de signaux de réponse est déterminé au moyen de

$$(6) \quad x_{sent\_2} = \frac{t_{SG\_receive2} - w}{t_{Sen}}$$

et

$$(7) \quad x_{sent\_3} = \frac{t_{SG\_receive3} - y}{t_{Sen}},$$

$t_{SG\_receive2}$ et $t_{SG\_receive3}$ étant des temps déterminés par le premier module émetteur/récepteur.

6. Procédé d'étalonnage temporel de signaux entre un premier module émetteur/récepteur (SG), par exemple un appareil de commande, et au moins un deuxième module émetteur/récepteur (Sen) sous la forme d'un capteur à ultrasons, le premier et le deuxième module émetteur/récepteur étant connectés l'un à l'autre par le biais d'au moins une interface de données bidirectionnelle, le deuxième module émetteur/récepteur (Sen) fournissant un signal d'horloge interne (tSen), comprenant les étapes suivantes :

   a) envoi d'une séquence de signaux définie par le deuxième module émetteur/récepteur (Sen) au premier module émetteur/récepteur (SG) ;
   b) réception de la séquence de signaux et mesure de caractéristiques temporelles de la séquence de signaux par le premier module émetteur/récepteur (SG) et finalement
   c) détermination de facteurs de correction temporels à partir de caractéristiques temporelles mesurées de la séquence de signaux reçue,

le procédé étant **caractérisé en ce que** des valeurs de paramètres du deuxième module émetteur/récepteur (Sen) sont fournies au premier module émetteur/récepteur (SG), les valeurs de paramètres étant des multiples définis d'une unité de temps interne du deuxième module émetteur/récepteur et le premier module émetteur/récepteur (SG) déterminant et compensant des pentes de flancs de la transmission des données.

**7.** Circuit émetteur/récepteur pour mettre en oeuvre le procédé selon l'une quelconque des revendications 1 à 6, présentant un premier module émetteur/récepteur (SG) et au moins un deuxième module émetteur/récepteur (Sen).

**8.** Circuit émetteur/récepteur selon la revendication 7, dans lequel le premier module émetteur/récepteur est un appareil de commande avec une mémoire.

**9.** Circuit émetteur/récepteur selon l'une quelconque des revendications 7 ou 8, dans lequel au moins l'un des modules émetteur/récepteur (SG, Sen) est un module logique/mémoire.

**10.** Circuit émetteur/récepteur selon l'une quelconque des revendications 7 à 9, dans lequel au moins une interface de données est disposée entre le premier et le deuxième module émetteur/récepteur.

**11.** Utilisation d'un circuit émetteur/récepteur selon les revendications 7 à 10 en tant que circuit pour une assistance au stationnement pour un véhicule automobile.

**Fig. 1**

$t_{SG}$

SG

$t_{Sen}$

Sen

**Fig. 2**

...$\sqcap\sqcap\sqcap$...$t_{SG}$ EXT

SG

CLK

Sen

Sen'

a) → b) → c) → d) → e) → f) → →

**Fig. 3**

Fig. 4

Fig. 5

Fig. 6

Fig. 7

Fig. 8

**IN DER BESCHREIBUNG AUFGEFÜHRTE DOKUMENTE**

**In der Beschreibung aufgeführte Patentdokumente**

- DE 10138883
- EP 1434382 A1